# EUROPEAN PATENT APPLICATION

(11) **EP 3 477 912 A1**
(43) Date of publication of application: **01.05.2019**
(21) Application number: 17198815.7
(22) Date of filing: 27.10.2017
(51) Int. Cl.: H04L 29/08

(54) **AN ELEVATOR SYSTEM HAVING A MOBILE COMMUNICATION NETWORK AND A METHOD FOR PROVIDING A MOBILE COMMUNICATION NETWORK FOR AN ELEVATOR SYSTEM**

(71) Applicant: KONE Corporation, 00330 Helsinki (FI)
(72) Inventor: HÄNNINEN, Ari, 00330 Helsinki (FI); RATIA, Jouni, 00330 Helsinki (FI); PURANEN, Mikko, 00330 Helsinki (FI); HUOTARI, Tommi, 00330 Helsinki (FI)
(74) Representative: Berggren Oy, Helsinki & Oulu

(57) **Abstract**

The invention relates to an elevator system having a mobile communication network. The elevator system comprises: an elevator shaft, and a mobile communication base station arranged to the elevator shaft to a close vicinity of top of a building. The base station is configured to receive and transmit signals with an external mobile communication system and to receive and transmit the signals inside the elevator shaft. The invention relates also to a method for providing a mobile communication network for an elevator system.

## Description

### TECHNICAL FIELD

The invention concerns in general the technical field of elevators. Especially the invention concerns mobile communication network for an elevator system.

### BACKGROUND

Nowadays wireless communication becomes more and more common in elevators, e.g. an elevator emergency telephone or other devices use wireless technology, such as second generation (2G), third generation (3G), or fourth generation (4G) mobile telecommunication technology.

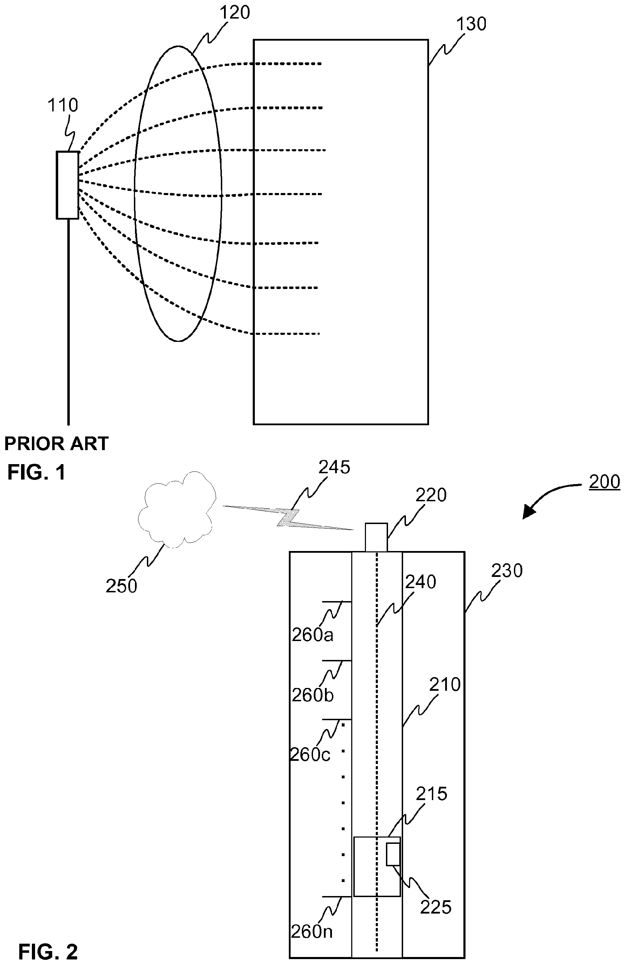

When going towards fifth generation (5G) mobile telecommunication technology, signals have higher frequency, even up to 30 GHz, and therefore shorter coverage range. At the same time buildings are coming more eco-efficient, which means that walls and windows will block wireless network signals to reach floors of the buildings and especially elevator shafts. Because, the elevator shafts are usually a backbone of the building made, e.g. from concrete and steel, it is difficult for wireless network signal to get into the elevator shaft, where a mobile terminal, such as a mobile phone or an elevator emergency telephone (KRM), may usually locate. Thus, modern buildings with metallized windows and effective thermal insulation with aluminized surfaces may prevent the usage of the wireless network or at least weaken the network significantly. Figure 1 illustrates one prior art solution, wherein an external base station 110 is used to provide 5G signals 120 inside a building 130. Typically, the 5G signals 120 cover only a part of the building as shown in Figure 1. Furthermore, tall buildings 130 would require several external base stations 110 in vertical direction.

Furthermore, wireless network operations in a building will typically start in a very late phase of a construction work of the building. Thus a proper wireless network may be available only after the building has been completed. However, when the building is under construction, there may be hundreds of workers, such as construction workers, fitters, etc., in the building. More and more of instructions and/or work orders for the workers are nowadays communicated through the wireless networks, such as mobile communication networks. Thus, there may be a problem to provide the instructions and/or work orders to the workers inside the building under construction because of the signal attenuation in buildings and elevator shafts as described above.

Moreover, according to elevator regulations it is not allowed to install into the elevator shaft any units, such as repeaters for providing wireless network, that are not related to elevators.

### SUMMARY

An objective of the invention is to present an elevator system having a mobile communication network and method for providing a mobile communication network for an elevator system. Another objective of the invention is that the elevator system having a mobile communication network and method for providing a mobile communication network for an elevator system enable providing a mobile communication network inside an elevator shaft for elevator related units and systems and also for any other users of the building, even already when a construction-time elevator starts to operate.

The objectives of the invention are reached by an elevator system and a method as defined by the respective independent claims.

According to a first aspect, an elevator system having a mobile communication network is provided, wherein the elevator system comprises: an elevator shaft, and a mobile communication base station arranged to the elevator shaft to a close vicinity of top of a building, wherein the base station is configured to receive and transmit signals with an external mobile communication system and to receive and transmit the signals inside the elevator shaft.

The mobile communication network may be 5G or pre-5G mobile communication network.

Furthermore, the elevator system may be a construction-time elevator system.

The base station may be arranged to a protection deck of the construction-time elevator system or in a close vicinity of the protection deck.

The elevator system may further comprise at least one elevator related unit with which the base station is configured to receive and transmit the signals.

Moreover, the elevator related unit may be a safety critical unit, which may be at least one of the following: elevator emergency telephone, wireless safety circuit, wireless intercom system, surveillance camera.

The base station may comprise at least one of the following: a passive repeater antenna, an active repeater antenna.

The elevator system may further comprise at least one secondary base station arranged to one or more landings of the elevator shaft and configured to receive and transmit the signals further inside the building.

The at least one secondary base station may comprise at least one of the following: a passive repeater antenna, an active repeater antenna.

Furthermore, the base station may comprise an internal power source for supplying power.

Alternatively or in addition, power may be supplied to the base station from a protection deck of the construction-time elevator.

The external mobile communication system may be at least one of the following: public network, telecommunication company system, cloud system.

According to a second aspect, a method for providing a mobile communication network for an elevator system is provided, wherein the method comprising: receiving and transmitting signals with an external mobile communication system by means of a mobile communication base station arranged the elevator shaft to a close vicinity of top of a building, and receiving and transmitting the signals inside the elevator shaft by means of the base station.

The mobile communication network may be 5G or pre-5G mobile communication network.

Furthermore, the elevator system may be a construction-time elevator system.

The method may further comprise receiving and transmitting the signals further inside the building by means of at least one secondary base station arranged to one or more landings of the elevator shaft.

The exemplary embodiments of the invention presented in this patent application are not to be interpreted to pose limitations to the applicability of the appended claims. The verb "to comprise" is used in this patent application as an open limitation that does not exclude the existence of also un-recited features. The features recited in depending claims are mutually freely combinable unless otherwise explicitly stated.

The novel features which are considered as characteristic of the invention are set forth in particular in the appended claims. The invention itself, however, both as to its construction and its method of operation, together with additional objectives and advantages thereof, will be best understood from the following description of specific embodiments when read in connection with the accompanying drawings.

### BRIEF DESCRIPTION OF FIGURES

The embodiments of the invention are illustrated by way of example, and not by way of limitation, in the figures of the accompanying drawings.
Figure 1 illustrates schematically a prior art solution.
Figure 2 illustrates schematically an example of an elevator system according to the invention.
Figure 3 illustrates schematically another example of an elevator system according to the invention.
Figure 4A illustrates schematically an example of an elevator system according to the invention implemented as a construction-time elevator system.
Figure 4B illustrates schematically another example of an elevator system according to the invention implemented as a construction-time elevator system.
Figure 5A illustrates schematically another example of an elevator system according to the invention implemented as a construction-time elevator system.
Figure 5B illustrates schematically another example of an elevator system according to the invention implemented as a construction-time elevator system.
Figure 6 illustrates schematically an example of a method according to the invention.
Figure 7 illustrates schematically an example of a base station according to the invention.
Figure 8 illustrates schematically an example of a secondary base station according to the invention.

### DESCRIPTION OF SOME EMBODIMENTS

Figure 2 illustrates schematically an example of an elevator system 200, wherein the embodiments of the invention may be implemented as will be described. The elevator system 200 according to the invention comprises an elevator shaft 210 and a mobile communication base station 220. The elevator system 200 further comprises a hoisting machine configured to drive an elevator car 215 in the elevator shaft 210 between the landings. For sake of clarity the hoisting machine and elevator car suspension means such as ropes or belts, are not shown in Figure 2. The elevator system 200 according to the invention enables providing a mobile communication network 240 inside the elevator shaft 210, which is a natural vertical channel in a building 230. Preferably, the mobile communication network provided by the elevator system 200 according to the invention may be a fifth generation (5G) or pre-5G mobile communication network 240, because 5G signals 240 forming the 5G network have higher frequency (even up to 30 GHz) and therefore shorter coverage range, i.e. the 5G signals 240 attenuate strongly and do not enter far inside the building. Thus, the elevator system 200 according to the invention comprises the base station 220 configured to receive and transmit the 5G signals inside the elevator shaft 210 and a building 230. The terms mobile communication networks or signals are used in this application to mean a next-generation of mobile communication networks or signals beyond fourth generation (4G) mobile communication networks or signals, such as 5G, pre-5G or similar networks or signals. The 5G or pre-5G network enables at least the following advantages in comparison to 4G networks: high data rates (such as even 100 times higher than in the 4G networks), wide bandwidths, high capacity, short delay (even less than 1 ms), reliable communication, etc.. These enable that the 5G network may be used to serve several mobile communication applications and/or users at the same time and a huge amount of data may be transferred.

The base station 220 is configured to receive and transmit signals 245 with one or more external mobile communication systems 250. The external mobile communication system 250 may be for example at least one of the following: public network, telecommunication company system, cloud system, etc.. The base station 220 is further configured to receive and transmit the signals 240 inside the elevator shaft 210 and thus enabling that the signal level is good even in the shaft pit. In Figures of this application the mobile communication signals 240 forming the mobile communication network are illustrated with individual dashed lines because of simplicity, but the network covers wider area, such as the whole elevator shaft 210 in Figure 2. The base station 220 is arranged to the elevator shaft 210 to a close vicinity of top of a building 230 in order to have as good signal strength as possible at the base station 220.

The elevator system 200 according to the invention may further comprise at least one elevator related unit 225 with which the base station 220 may be configured to receive and transmit the signals. The at least one elevator related unit 225 may be any elevator related unit, component, or system relating to the elevator system 200. Alternatively or in addition, elevator related unit 225 may be a safety critical unit, which may be for example at least one of the following: elevator emergency telephone (KRM), wireless safety circuit, wireless intercom system, surveillance camera. According to elevator regulations it is not allowed to install into the elevator shaft 210 any units or systems, such as base stations for providing wireless network, that are not related to elevators. However, if one or more units or systems of the elevator system, e.g. the elevator emergency telephone or safety circuit, are using the mobile communication network 240 received and transmitted by the base station 220, it is allowed to use of the mobile communication network 240 also by other units or users that are not related to the elevator system, such as any mobile terminal residing in the elevator car 215 in the elevator shaft 210. Thus, the base station 220 may be further configured to receive and transmit signals with the at least one mobile terminal residing in the elevator car 215 in the elevator shaft 210. The mobile terminal may be for example a mobile phone, a tablet computer, elevator related unit 225, or any device/system/unit capable to use the mobile communication network provided by the system according to the invention.

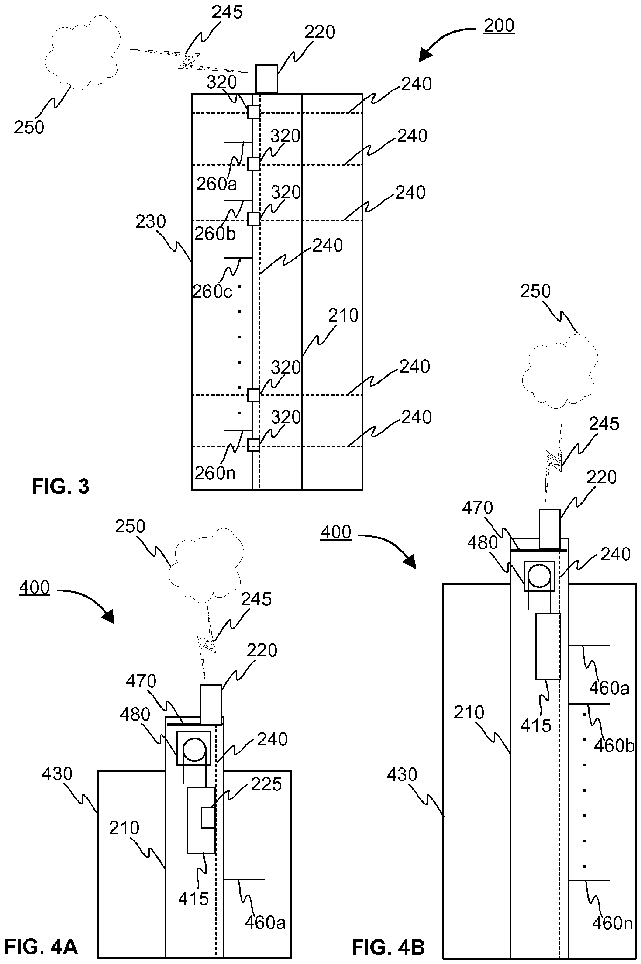

According to one exemplifying embodiment of the invention, the elevator system 200 may further comprise at least one secondary base station 320 arranged to one or more landings 260a-260n of the elevator shaft 210. The secondary base stations 320 may be configured to receive and transmit signals 240 with the base station 220 and thus configured to receive and transmit the signals 240 further inside the building 230. This is illustrated in Figure 3. The at least one secondary base station 320 may be arranged to a landing door of the landing 260a-260n, for example. Arranging the at least one secondary base station 320 to each landing 260a-260n of the elevator shaft 210 enables that one or more mobile terminals residing almost anywhere inside the building 230 may use the mobile network provided by the base station 220 and/or the at least one secondary base station 320. Thus, the base station 220 may be further configured to receive and transmit signals with the at least one mobile terminal residing inside the building 230 via the at least one secondary base station 320. The mobile terminal may be for example a mobile phone, a tablet computer, elevator related unit 225, or any device/system/unit capable to use the mobile communication network provided by the system according to the invention.

According to an embodiment of the invention the elevator system 200 may be a construction-time elevator system 400, such as a jump lift. The construction-time elevator system 400 means an elevator system that is may be installed to a building 430 under construction as soon as the first levels of completed floors are emerging. The construction-time elevator system 400 enables that elevator shaft 210 construction and elevator installations may continue at higher floors while the elevator is already operating in the same elevator shaft 210 at the lower floors, below a protection deck 470 that may be called as a crash deck. The crash deck 470 is always in a close vicinity of the top of the building 430 and thus enabling open air connection. Alternatively or in addition, the construction-time elevator system 400 may comprise multiple crash decks 470 on top of each other a distance from each other.

The construction-time elevator 400 uses the permanent elevator shaft 210 of the building 430 during the construction time and enables that the completed floors may be used while the installation continues above. The construction-time elevator system 400 comprises a temporary machine room 480 that moves upward, i.e. jumps, in the elevator shaft 210 under its own power as the construction work progresses. The temporary machine room 480 is arranged inside the elevator shaft 210. A construction-time elevator car 415 below the temporary machine room 480 may begin servicing the first floors already at early phase of the construction. When the structure of the building 430 rises, the crash deck 470 is moved a few floors up, typically three floors at a time, but maximum five floors at a time. When the building 430 is finished, the construction-time elevator system 400 is then used as a permanent elevator system 200.

Because the construction-time elevator may be installed in the permanent elevator shaft 210 inside the building 430, there is no exterior temporary/climbing elevator needed during the construction. Compared to traditional temporary elevator, the construction-time elevator system 400 described above, i.e. jump lift, enables a faster and safer construction process. In addition, jump lift requires considerably little time for getting a permanent elevator for normal operation at the end of construction stage.

In the construction-time elevator system 400 implementation of the invention the base station 220 may be arranged to a protection deck 470, i.e. the crash deck, or in a close vicinity of the crash deck 470. The base station 220 may receive and transmit the signals 240 inside the elevator shaft 210 already during the construction work. For safety reasons according to elevator regulations the elevator emergency telephone 225 is required to be installed as soon as the construction-time elevator system 400 starts to serve passengers. Because the base station 220 is arranged to the crash deck 470 of the construction-time elevator system 400 already when the construction-time elevator car 415 starts to operate, the signals 240 may be received and transmitted between the base station 220 and the elevator emergency telephone 225 during the construction work. In addition, the signals 240 received and transmitted by the base station 220 may be used by any other units or users that are not related to the elevator system, such as any mobile terminal residing inside the elevator shaft 210, already during the construction phase of the building 430. The mobile terminal may be for example a mobile phone, a tablet computer, elevator related unit 225, or any device/system/unit capable to use the mobile communication network provided by the system according to the invention.

Figure 4A illustrates schematically an example of the elevator system according to the invention implemented as construction-time elevator system 400. In the example of the construction-time elevator system 400 illustrated in Figure 4A the building 430 comprises two floors, i.e. the construction work of the building 430 is at the early phase, but the elevator system 400 according to the invention already enables the mobile network inside the elevator shaft 210.

When the building 430 gets taller during the construction, the crash deck 470 goes higher and is always at the top of the building 430 so the signal strength at the base station 220 arranged to the crash deck 470 is always good and signals 240 may be received and transmitted inside the elevator shaft 210. Figure 4B illustrates schematically another example of the elevator system according to the invention implemented as construction-time elevator system 400. In the example of the construction-time elevator system 400 illustrated in Figure 4B the building 430 comprises already multiple floors and the elevator system 400 according to the invention enables the mobile network inside the elevator shaft 210.

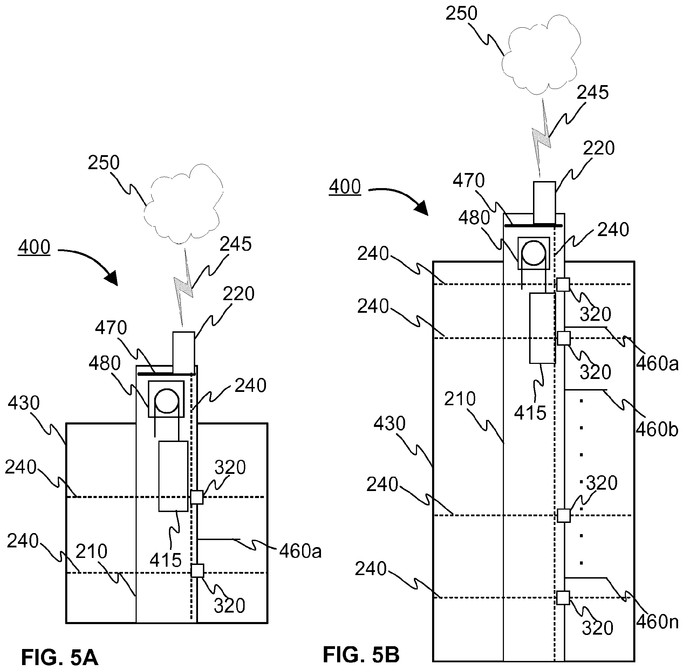

In addition, the at least one secondary base station 320 may be arranged to one or more landings 460a-460n of the elevator shaft 210 already during the construction time of the building 430 in order to receive and transmit the signals 240 inside the building 430. Thus, the base station 220 may be further configured to receive and transmit signals with at least one mobile terminal residing inside the building 230 via the at least one secondary base station 320. This enables that network 240 may be provided to the elevator shaft 210 and to each floor of the building 430 under construction. It enables that the network 240 may be used already during the construction time of the building 430 by the elevator units or systems, such as the elevator emergency telephone 225, but also by any other users inside the building 430, such as construction workers, for example in order to provide instructions and/or work orders. Furthermore, it enables that the network 240 may be used for example for access control, material management, etc. inside the building 430 already during the construction time of the building 430. Figures 5A and 5B illustrate schematically examples of the of the elevator system according to the invention implemented as construction-time elevator system 400 comprising at least one secondary base station 320 at two different phases of the construction work of the building 320.

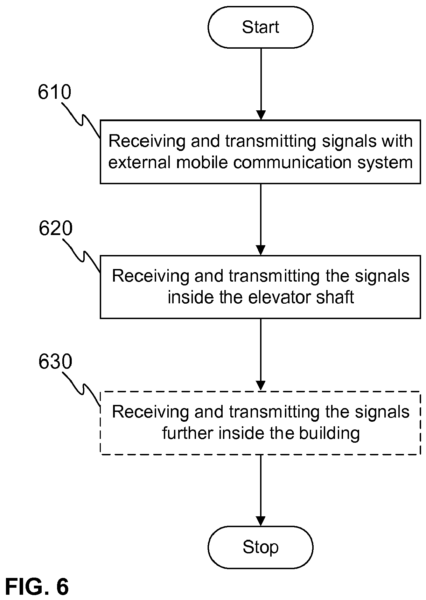

Next an example of a method according to the invention is described by referring to Figure 6. Figure 6 schematically illustrates the invention as a flow chart. As already discussed the base station receives and transmits 610 signals with the external mobile communication system and further receives and transmits 620 the signals inside the elevator shaft. Thus, the base station may receive and transmit signals with at least one elevator related unit of the elevator system and/or at least one mobile terminal residing in the elevator car in the elevator shaft. In addition, as already discussed at least one secondary base station arranged to one or more landings of the elevator shaft may receive and transmit 630 the signals inside the building. Thus, the base station may receive and transmit signals with the at least one mobile terminal residing inside the building via the at least one secondary base station. The signals may preferably be 5G or pre-5G signals as described above. Furthermore, the elevator system may be implemented as a construction-time elevator system as also described above.

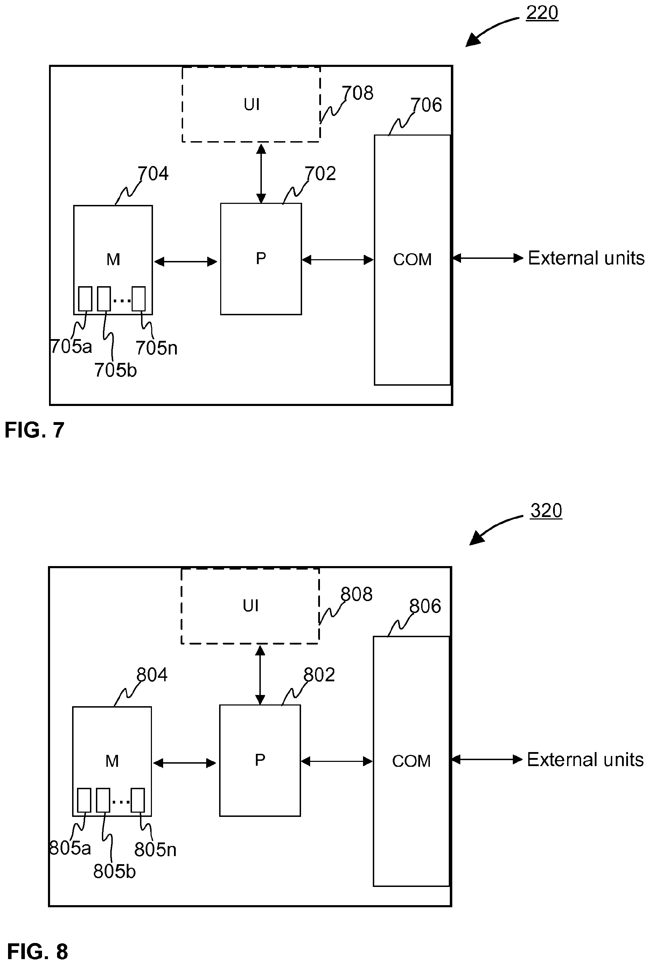

Figure 7 illustrates schematically an example of the base station 220 according to the invention. The base station 220 comprises at least one processor 702 and at least one memory 704 for storing at least one portion of computer program code 705a-705n and any data values. Furthermore, the base station 220 may comprise a communication interface 606 in order to provide interface for communication with any external unit, such as the external mobile communication system 250, at least one secondary base station 320, at least one elevator related unit 225 of the elevator system, any mobile terminal, database and/or any other external systems in order to exchange pieces of information as described. The communication interface 706 may be based on one or more known communication technologies, either wired or wireless, in order to exchange pieces of information as described earlier. The communication interface 706 of the base station 220 may comprise at least one of the following: a passive repeater antenna, an active repeater antenna, in order to communicate with the at least one secondary base station 320, at least one elevator related unit 225 of the elevator system, and/or any mobile terminals as described. Furthermore, the base station 220 may comprise a user interface 708. The mentioned elements may be communicatively coupled to each other with e.g. an internal bus.

For sake of clarity, the processor herein refers to any unit suitable for processing information and control the operation of the base station 220, among other tasks. The operations may also be implemented with a microcontroller solution with embedded software. Similarly, the memory 704 is not limited to a certain type of memory only, but any memory type suitable for storing the described pieces of information may be applied in the context of the present invention.

The processor 702 of the base station 220 is at least configured to implement at least some operations of the base station 220 as described. The implementation of the operations of the base station 220 may be achieved by arranging the processor 702 to execute at least some portion of computer program code 705a-705n stored in the memory 704 causing the processor 702, and thus the base station 220, to implement one or more operations of the base station 220. The processor 702 is thus arranged to access the memory 704 and retrieve and store any information therefrom and thereto. Moreover, the processor 702 is configured to control the communication through the communication interface 706 with any external unit, such as with the external mobile communication system 250, the at least one secondary base station 320, the at least one elevator related unit 225 of the elevator system, and/or any mobile terminal. The base station 220 may be any base station, such as a repeater for example, suitable for receiving and transmitting 5G, pre-5G or similar signals.

Furthermore, according to one embodiment of the elevator system according to the invention, the base station 220 may comprise an internal power source to provide operating power for the base station 220. The internal power source may be for example one of the following: battery, capacitive solution, regenerative solution. Alternatively, the operating power may be provided to the base station 220 from the protection deck 470 of the construction-time elevator, if the elevator system is implemented as the construction-time elevator system 400. Alternatively or in addition, the operating power may be provided to the base station 220 from a solar cell arranged to the protection deck 470 of the construction-time elevator, if the elevator system is implemented as the construction-time elevator system 400.

Figure 8 illustrates schematically an example of the secondary base station 320 according to the invention. The secondary base station 320 comprises at least one processor 802 and at least one memory 804 for storing at least one portion of computer program code 805a-805n and any data values. Furthermore, the secondary base station 320 may comprise a communication interface 806 in order to provide interface for communication with any external unit, such as the base station 220, the at least one elevator related unit 225 of the elevator system, any mobile terminal, database and/or any other external systems in order to exchange pieces of information as described. The communication interface 806 may be based on one or more known communication technologies, either wired or wireless, in order to exchange pieces of information as described earlier. The communication interface 806 of the base station 320 may comprise at least one of the following: a passive repeater antenna, an active repeater antenna, in order to communicate with the base station 220, the at least one elevator related unit 225 of the elevator system, and/or any mobile terminals as described. Furthermore, the secondary base station 320 may comprise a user interface 808. The mentioned elements may be communicatively coupled to each other with e.g. an internal bus.

For sake of clarity, the processor herein refers to any unit suitable for processing information and control the operation of the secondary base station 320, among other tasks. The operations may also be implemented with a microcontroller solution with embedded software. Similarly, the memory 804 is not limited to a certain type of memory only, but any memory type suitable for storing the described pieces of information may be applied in the context of the present invention.

The processor 802 of the secondary base station 320 is at least configured to implement at least some operations of the secondary base station 320 as described. The implementation of the operations of the secondary base station 320 may be achieved by arranging the processor 802 to execute at least some portion of computer program code 805a-805n stored in the memory 804 causing the processor 802, and thus the secondary base station 320, to implement one or more operations of the secondary base station 320. The processor 802 is thus arranged to access the memory 804 and retrieve and store any information therefrom and thereto. Moreover, the processor 802 is configured to control the communication through the communication interface 806 with any external unit, such as with the external mobile communication system 250, the base station 220, the at least one elevator related unit 225 of the elevator system, and/or any mobile terminal. The secondary base station 320 may be any base station, such as a repeater for example, suitable for receiving and transmitting 5G, pre-5G or similar signals.

Furthermore, according to one embodiment of the elevator system according to the invention, the at least one secondary base station 320 may comprise an internal power source to provide operating power for the secondary base station 320. The internal power source may be for example one of the following: battery, capacitive solution, regenerative solution. Alternatively, the operating power may be provided to the at least one secondary base station 320 from an electric system of the building 230 or from a machine room of the elevator system 200, for example from power supply cables of the elevator system 200.

The above described elevator system 200, 400 according to the invention enables providing a mobile communication network, preferably 5G or pre-5G network or any similar network, inside the elevator shaft 210 for elevator related units 225 and systems, such as elevator emergency telephone, wireless safety circuit or any other elevator related units or systems, already when the construction-time elevator starts to operate. Furthermore, at least some of the embodiments of the elevator system 200, 400 according to the invention enables providing mobile communication network, preferably 5G or pre-5G network or any similar network, also for any other users of the building already during the construction phase of the building already starting, when the construction-time elevator starts to operate. Moreover, the same elevator system 200, 400 may be used to provide the mobile communication network in the finished permanent building. At least some of the embodiments of the invention enable providing a mobile communication network, preferably 5G or pre-5G network or any similar network, inside the floors of the building, either in the construction-time building or in the finished building. Alternatively or in addition, the above described elevator system 200, 400 enables that the provided mobile communication network may be used for access control, material management, building automation, lightning control, etc.. Furthermore, the mobile communication network provided by the above described elevator system 200, 400 may be used for Internet of Things (IoT). Alternatively or in addition, the mobile communication network provided by the above described elevator system 200, 400 may be used to provide elevator related data obtained from one or more elevator related units, components, or systems for example to an external cloud server or similar.

The specific examples provided in the description given above should not be construed as limiting the applicability and/or the interpretation of the appended claims. Lists and groups of examples provided in the description given above are not exhaustive unless otherwise explicitly stated.

## Claims

1. An elevator system having a mobile communication network, wherein the elevator system comprises:
- an elevator shaft, and
- a mobile communication base station arranged to the elevator shaft to a close vicinity of top of a building, wherein the base station is configured to receive and transmit signals with an external mobile communication system and to receive and transmit the signals inside the elevator shaft.

2. The elevator system according to claim 1, wherein the mobile communication network is 5G or pre-5G mobile communication network.

3. The elevator system according to any of the preceding claims, wherein the elevator system is a construction-time elevator system.

4. The elevator system according to claim 3, wherein the base station is arranged to a protection deck of the construction-time elevator system or in a close vicinity of the protection deck.

5. The elevator system according to any of the preceding claims, wherein the system further comprises at least one elevator related unit with which the base station is configured to receive and transmit the signals.

6. The elevator system according to claim 5, wherein the elevator related unit is a safety critical unit, which is at least one of the following: elevator emergency telephone, wireless safety circuit, wireless intercom system, surveillance camera.

7. The elevator system according to any of the preceding claims, wherein the base station comprises at least one of the following: a passive repeater antenna, an active repeater antenna.

8. The elevator system according to any of the preceding claims, wherein the system further comprising at least one secondary base station arranged to one or more landings of the elevator shaft and configured to receive and transmit the signals further inside the building.

9. The elevator system according to claim 8, wherein the at least one secondary base station comprises at least one of the following: a passive repeater antenna, an active repeater antenna.

10. The elevator system according to any of the preceding claims, wherein the base station comprises an internal power source for supplying power.

11. The elevator system according to any of claims 3 to 9, wherein power is supplied to the base station from a protection deck of the construction-time elevator.

12. The elevator system according to any of the preceding claims, wherein the external mobile communication system is at least one of the following: public network, telecommunication company system, cloud system.

13. A method for providing a mobile communication network for an elevator system, wherein the method comprising:
- receiving and transmitting signals with an external mobile communication system by means of a mobile communication base station arranged the elevator shaft to a close vicinity of top of a building, and
- receiving and transmitting the signals inside the elevator shaft by means of the base station.

14. The method according to claim 13, wherein the mobile communication network is 5G or pre-5G mobile communication network.

15. The method according to any of claims 13 or 14, wherein the elevator system is a construction-time elevator system.

16. The method according to any of claims 13-15, wherein the method further comprising receiving and transmitting the signals further inside the building by means of at least one secondary base station arranged to one or more landings of the elevator shaft.
